# EUROPÄISCHE PATENTSCHRIFT

(11) **EP 2 203 290 B1**
(45) Veröffentlichungstag und Bekanntmachung des Hinweises auf die Patenterteilung: **29.02.2012**
(21) Anmeldenummer: 08801922.9
(22) Anmeldetag: 09.09.2008
(51) Int. Cl.: B29C 44/34, C08J 9/16

(54) **VERFAHREN UND VORRICHTUNG ZUR HERSTELLUNG EINES POLYMERGRANULATS**
PROCESS AND DEVICE FOR PRODUCING POLYMER GRANULES
PROCÉDÉ ET DISPOSITIF DE FABRICATION D'UN GRANULÉ DE POLYMÈRE

(30) Priorität: 22.10.2007 DE 102007050681
(43) Veröffentlichungstag der Anmeldung: 07.07.2010
(73) Patentinhaber: Coperion GmbH, 70469 Stuttgart (DE)
(72) Erfinder: WALTER, Björn, 70437 Stuttgart (DE)
(74) Vertreter: Rau, Manfred
(86) Internationale Anmeldenummer: PCT/EP2008/007348
(87) Internationale Veröffentlichungsnummer: WO 2009/052898

(56) Entgegenhaltungen:
- EP-B1- 1 517 947
- US-A- 5 000 891
- US-A1- 2006 211 780

## Beschreibung

Die Erfindung betrifft ein Verfahren zur Herstellung eines Polymergranulats. Ferner betrifft die Erfindung eine Vorrichtung zur Herstellung eines Polymergranulats.

Expandierfähige oder bereits expandierte Polymergranulate werden seit langem zur Herstellung von Schaumstoffformteilen eingesetzt. Expandierfähige Polymergranulate werden dabei meist aus Polystyrol hergestellt, wohingegen bereits expandierte Polymergranulate meist aus Polypropylen hergestellt werden. Die Expandierfähigkeit bzw. die Expansion der Polymergranulate wird durch Treibmittel erreicht.

Expandierfähige Polymergranulate werden im bekannten Polymerisationsverfahren hergestellt, bei dem Treibmittel und Additive bereits im Polymerisationsreaktor zugegeben werden. Nachteilig bei diesem Verfahren ist, dass hinsichtlich der verwendbaren Treibmittel und Additive nur eine geringe Flexibilität gegeben ist und insbesondere die verwendeten Additive die Polymerisationsreaktion beeinträchtigen. Zudem weisen die derart hergestellten Polymergranulate eine breite Größenverteilung auf, so dass diese nach der Herstellung aufwändig getrennt werden müssen.

Aus der EP 1 517 947 B1 ist ein Verfahren zur Herstellung von expandierfähigen Styrolpolymeren bekannt. Bei diesem Verfahren wird das Treibmittel mittels eines statischen oder dynamischen Mischers in eine Styrolpolymerschmelze eingemischt. Die treibmittelhaltige Styrolpolymerschmelze wird anschließend gekühlt und granuliert. Bei diesem Verfahren werden bevorzugt statische Mischer eingesetzt, da der mechanische und thermische Energieeintrag in die Styrolpolymerschmelze so gering wie möglich zu halten ist. Nachteilig ist, dass auch bei diesem Verfahren eine geringe Flexibilität hinsichtlich der verwendbaren Treibmittel und Additive gegeben ist.

Aus den US 2006/211780 A1 und US 5,000,891 A sind Verfahren zur Herstellung expandierbarer Polymergranulate bekannt, bei denen eine Polymerschmelze mit einem Treibmittel versetzt, die treibmittelhaltige Schmelze abgekühlt und in einem Extruder verarbeitet wird, wobei ggf. weitere Additive zugesetzt und die Schmelze abgekühlt sowie anschließend granuliert wird.

Der Erfindung liegt daher die Aufgabe zugrunde, ein Verfahren und eine Vorrichtung zur Herstellung eines Polymergranulats bereitzustellen, die ein einfaches und flexibles Einmischen von Additiven und Treibmitteln in ein Polymer bei einem hohen Polymerdurchsatz ermöglichen.

Diese Aufgabe wird erfindungsgemäß durch ein Verfahren mit den Merkmalen des Anspruches 1 gelöst. Durch das erste Kühlen der Polymerschmelze vor der Zugabe des mindestens einen Additivs kann dieses schonend in die Polymerschmelze eingemischt werden. Insbesondere wird ein schonendes Einmischen des mindestens einen Additivs noch vor der Zugabe des mindestens einen Treibmittels ermöglicht. Somit können auch temperatursensitive Additive, wie beispielsweise Flammschutzmittel oder Zellmodifikatoren, in die Polymerschmelze eingemischt werden. Die Polymerschmelze weist nach dem ersten Kühlen eine Temperatur von weniger als 240°C, insbesondere von weniger als 220°C, und insbesondere von weniger als 200°C auf. Durch den statischen Schmelzekühler wird eine homogene Kühlung und ein einheitliches Temperaturprofil der Polymerschmelze erzielt. Dadurch, dass das Einmischen des mindestens einen Additivs und des mindestens einen Treibmittels ausschließlich mittels einer Schneckenmaschine, also eines dynamischen Mischers, erfolgt, werden das mindestens eine Additiv und das mindestens eine Treibmittel sehr homogen in die Polymerschmelze eingemischt. Da das mindestens eine Additiv und das mindestens eine Treibmittel in die Schneckenmaschine zugegeben werden, kann die Additiv- und Treibmittelzugabe im Vergleich zu dem bekannten Polymerisationsverfahren einfach und schnell variiert werden. Dadurch, dass die Polymerschmelze vor dem Einmischen des mindestens einen Additivs und des mindestens einen Treibmittels gekühlt wird, wirkt sich eine aus dem Eintrag von Scherenergie resultierende Temperaturerhöhung beim Einmischen mittels der Schneckenmaschine nicht nachteilig aus. Durch das zweite Kühlen der additiv- und treibmittelhaltigen Polymerschmelze wird die Temperaturerhöhung beim Einmischen des mindestens einen Additivs und des mindestens einen Treibmittels ausgeglichen. Weiterhin wird durch das zweite Kühlen ein aus der Zugabe des mindestens einen Treibmittels resultierender Viskositätsabfall der Polymerschmelze ausgeglichen, wobei die Polymerschmelze auf eine für das Granulieren erforderliche Temperatur gekühlt wird. Die Polymerschmelze weist nach dem zweiten Kühlen eine Temperatur von weniger als 220°C, insbesondere von weniger als 200°C, und insbesondere von weniger als 170°C auf. Der statische Schmelzekühler ermöglicht wiederum eine homogene Kühlung und ein einheitliches Temperaturprofil der Polymerschmelze.

Als Polymere können beispielsweise Polystyrol, Polyethylen, Polypropylen sowie Mischungen dieser Polymere verwendet werden. Weiterhin können auch Polymere auf Basis nachwachsender Rohstoffe, wie beispielsweise Polylactide, sowie abbaufähige Polymere, wie beispielsweise Celluloseacetate, verwendet werden. Als Additive können beispielsweise Flammschutzmittel, Zellmodifikatoren, Graphite oder Farbstoffe in die Polymerschmelze eingemischt werden. Als Treibmittel können Kohlenwasserstoffe, wie beispielsweise n-Pentan oder iso-Pentan, Alkohole, Kohlendioxid, Stickstoff oder Mischungen dieser Verbindungen in die Polymerschmelze eingemischt werden. Je nach Wahl des Polymers und des mindestens einen Treibmittels können in Abhängigkeit des Granulierverfahrens sowohl expandierfähige als auch expandierte Polymergranulate hergestellt werden. Zur Herstellung expansionsfähiger Polymergranulate kommt bevorzugt eine Unterwassergranulierung zum Einsatz, wohingegen zur Herstellung expandierter Polymergranulate bevorzugt eine Wasserringgranulierung zum Einsatz kommt. Durch das erfindungsgemäße kontinuierliche Verfahren ist die Herstellung von expandierfähigen oder bereits expandierten Polymergranulaten mit einem hohen Polymerdurchsatz möglich.

Durch eine Kühlung nach Anspruch 2 kann die Temperatur der Polymerschmelze während des Einmischens des mindestens einen Additivs und/oder des Einmischens des mindestens einen Treibmittels konstant gehalten werden. Dies wirkt sich vorteilhaft auf die Qualität des Polymergranulats aus.

Durch ein Erzeugen einer Stauzone nach Anspruch 3 wird verhindert, dass das mindestens eine Treibmittel in Richtung einer Mischzone zum Einmischen des mindestens einen Additivs entweicht.

Durch einen Druck nach Anspruch 4 wird eine Entmischung des mindestens einen Treibmittels aus der Polymerschmelze aufgrund eines Druckabfalls vermieden. Zur Vermeidung einer Entmischung kann der Druck während des Einmischens des mindestens einen Treibmittels entweder konstant gehalten oder erhöht werden.

Durch eine Druckerhöhung nach Anspruch 5 wird einerseits der erforderliche Druck für die nachfolgenden Verfahrensschritte erzeugt und andererseits die Schneckenmaschine von der Funktion der Druckerhöhung weitestgehend entlastet, wodurch eine Temperaturerhöhung der Polymerschmelze in der Schneckenmaschine vermieden wird.

Durch eine Bereitstellung der Polymerschmelze nach Anspruch 6 wird eine hohe Wirtschaftlichkeit des Verfahrens erzielt, da die Polymerschmelze unmittelbar aus dem Polymerisationsreaktor entnommen werden kann und keine zusätzliche Energie zum Erzeugen der Polymerschmelze erforderlich ist.

Die Aufgabe wird ferner durch eine Vorrichtung mit den Merkmalen des Anspruchs 7 gelöst. Die Vorteile der erfindungsgemäßen Vorrichtung entsprechen den Vorteilen des erfindungsgemäßen Verfahrens.

Eine Ausbildung der Schneckenmaschine nach Anspruch 11 ermöglicht ein besonders homogenes und schonendes Einmischen des mindestens einen Additivs und des mindestens einen Treibmittels bei einem hohen Polymerdurchsatz.

Eine Schmelzepumpe nach Anspruch 12 entlastet die Schneckenmaschine von der Funktion der Druckerhöhung für die nachfolgenden Verfahrensschritte, so dass eine Temperaturerhöhung der Polymerschmelze in der Schneckenmaschine vermieden wird. Eine erste Schmelzepumpe ist zwischen der Schneckenmaschine und dem zweiten statischen Schmelzekühler angeordnet, so dass die Schmelzepumpe die Polymerschmelze durch den statischen Schmelzekühler und die Granuliereinrichtung presst. Zusätzlich kann eine zweite Schmelzepumpe zwischen dem zweiten statischen Schmelzekühler und der Granuliereinrichtung vorgesehen sein. Die Schmelzepumpen sind vorzugsweise als Hochdruck-Zahnradpumpen ausgebildet.

Eine Schmelzepumpe nach Anspruch 13 ermöglicht eine Druckerhöhung der Polymerschmelze nach dem Austritt aus dem Polymerisationsreaktor, so dass die Polymerschmelze durch den ersten statischen Schmelzekühler gepresst wird. Die Schmelzepumpe ist vorzugsweise als Hochdruck-Zahnradpumpe ausgebildet.

Weitere Merkmale, Einzelheiten und Vorteile der Erfindung ergeben sich aus der nachfolgenden Beschreibung eines Ausführungsbeispiels. Es zeigen:

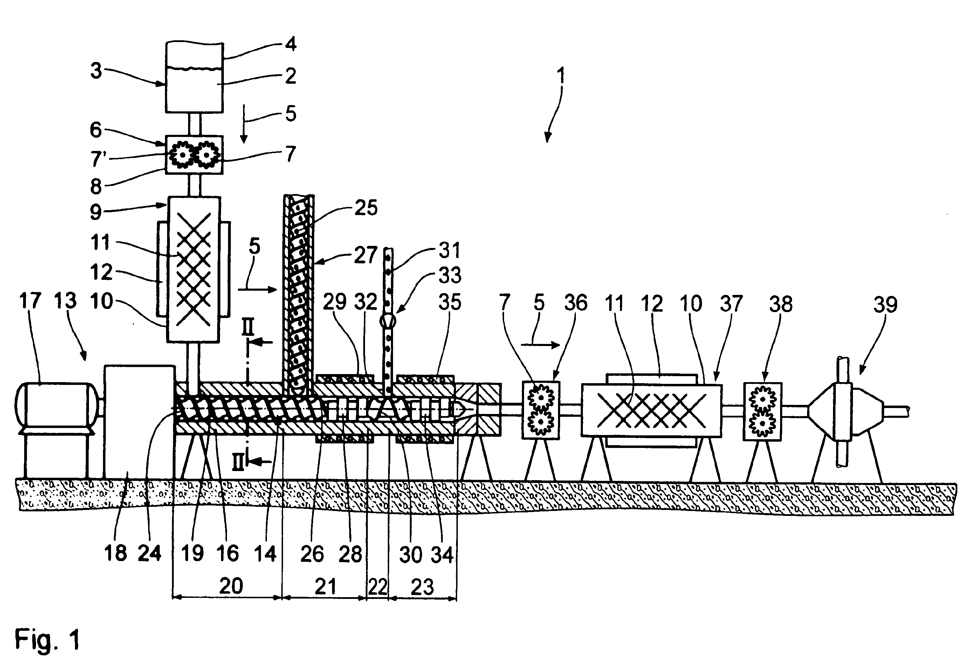

- Fig. 1: eine Vorrichtung zur Herstellung eines Polymergranulats in schematischer Darstellung, und
- Fig. 2: einen Querschnitt durch eine Schneckenmaschine entlang der Schnittlinie II-II in Fig. 1.

Eine Vorrichtung 1 zur Herstellung eines Polymergranulats weist zur Bereitstellung einer Polymerschmelze 2 einen Polymerisationsreaktor 3 mit einem Reaktorbehälter 4 auf. Der Polymerisationsreaktor 3 ist in üblicher Weise aufgebaut und bekannt.

Dem Polymerisationsreaktor 3 ist in einer Förderrichtung 5 eine erste Schmelzepumpe 6 nachgeordnet, in die der Polymerisationsreaktor 3 mündet. Die Schmelzepumpe 6 ist als Hochdruck-Zahnradpumpe ausgebildet und weist zwei drehantreibbare Zahnrad-Rotoren 7, 7' auf, die in einem Pumpengehäuse 8 angeordnet sind. Hinsichtlich des genauen Aufbaus einer solchen Hochdruck-Zahnradpumpe wird auf die EP 1 295 036 B1 (entspr. US 6,761,546 B2) verwiesen.

Der ersten Schmelzepumpe 6 ist in der Förderrichtung 5 ein erster statischer Schmelzekühler 9 nachgeordnet, in den die erste Schmelzepumpe 6 mündet. Der Schmelzekühler 9 weist ein Kühlergehäuse 10 auf, in dem ein üblicher Statik-Mischkörper 11 angeordnet ist. Zum Kühlen der Polymerschmelze 2 ist das Kühlergehäuse 10 mit einem Kühlelement 12 versehen. Der Statik-Mischkörper 11 ist in üblicher Weise aufgebaut und beispielsweise in der EP 1 067 352 B1 beschrieben.

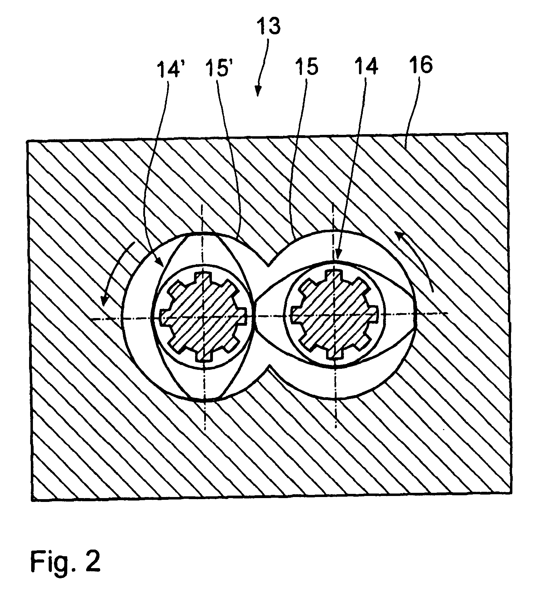

Dem ersten Schmelzekühler 9 ist in der Förderrichtung 5 eine als Zwei-Wellen-Schneckenkneter ausgebildete Schneckenmaschine 13 nachgeordnet. Die Schneckenmaschine 13 ist in ihrem Grundaufbau in üblicher Weise ausgestaltet und weist zwei Schnecken 14, 14' auf, die in entsprechenden Bohrungen 15, 15' eines Gehäuses 16 angeordnet sind. Wie Fig. 2 zu entnehmen ist, sind die Schnecken 14, 14' dicht kämmend und gleichsinnig drehend ausgebildet. Der Antrieb der Schnecken 14, 14' erfolgt mittels eines Elektromotors 17 über ein Untersetzungs- und Verzweigungs-Getriebe 18, an dem das Gehäuse 16 angeflanscht ist. Benachbart zu dem Getriebe 18 am stromaufwärtigen Ende der Schneckenmaschine 13 mündet der erste Schmelzekühler 9 über eine Schmelze-Zuführöffnung 19 in das Gehäuse 16 ein.

Die Schneckenmaschine 13 weist in Förderrichtung 5 hintereinander eine Einzugszone 20, eine erste Mischzone 21, eine Stauzone 22 und eine zweite Mischzone 23 auf. In der Einzugszone 20 weisen die Schnecken 14, 14' Schneckenstege 24 zum Fördern der Polymerschmelze 2 in Förderrichtung 5 auf.

Am stromaufwärtigen Ende der ersten Mischzone 21 ist zum Zuführen von Additiven 25 eine Additiv-Zuführöffnung 26 in dem Gehäuse 16 angeordnet. Durch die Additiv-Zuführöffnung 26 mündet eine erste Zuführeinrichtung 27 in das Gehäuse 16. Die Zuführeinrichtung 27 ist als zweiwellige Förder-Schneckenmaschine ausgebildet. In der ersten Mischzone 21 weisen die Schnecken 14, 14' Schneckenstege 24 und zum Einmischen der Additive 25 Misch- und Knetelemente 28 auf. Die Schneckenmaschine 13 weist in der ersten Mischzone 21 eine erste Kühleinrichtung 29 zum Kühlen der Polymerschmelze 2 auf.

In der Stauzone 22, die zwischen den Mischzonen 21, 23 angeordnet ist, weisen die Schnecken 14, 14' entgegen die Förderrichtung 5 fördernde Schneckenstege 30 auf.

Am stromaufwärtigen Ende der zweiten Mischzone 23 ist zum Zuführen von Treibmitteln 31 eine Treibmittel-Zuführöffnung 32 in dem Gehäuse 16 angeordnet. Durch die Treibmittel-Zuführöffnung 32 mündet eine zweite Zuführeinrichtung 33 in das Gehäuse 16. Die Zuführeinrichtung 33 ist als Kolbenpumpe ausgebildet. In der zweiten Mischzone 23 weisen die Schnecken 14, 14' Schneckenstege 24 und zum Einmischen der Treibmittel 31 in die Polymerschmelze 2 Misch- und Knetelemente 34 auf. Zum Kühlen der Polymerschmelze 2 weist die Schneckenmaschine 13 in der zweiten Mischzone 23 eine zweite Kühleinrichtung 35 auf.

Der Schneckenmaschine 13 ist in Förderrichtung 5 eine zweite Schmelzepumpe 36 und dieser ein zweiter statischer Schmelzekühler 37 nachgeordnet, wobei die Schneckenmaschine 13 in die zweite Schmelzepumpe 36 und diese wiederum in den zweiten Schmelzekühler 37 mündet. Der Aufbau der zweiten Schmelzepumpe 36 entspricht dem der ersten Schmelzepumpe 6. Weiterhin entspricht der Aufbau des zweiten Schmelzekühlers 37 dem des ersten Schmelzekühlers 9.

Dem zweiten Schmelzekühler 37 ist in Förderrichtung 5 eine dritte Schmelzepumpe 38 und dieser eine Granuliereinrichtung 39 nachgeordnet, wobei der zweite Schmelzekühler 37 in die dritte Schmelzepumpe 38 und diese wiederum in die Granuliereinrichtung 39 mündet. Der Aufbau der dritten Schmelzepumpe 38 entspricht dem Aufbau der ersten und der zweiten Schmelzepumpe 6, 36.

Die Granuliereinrichtung 39 ist als Unterwasser-Granuliereinrichtung ausgebildet. Hinsichtlich des genauen Aufbaus einer derartigen Granuliereinrichtung wird auf die DE 103 22 610 A1 oder die EP 1 110 695 B1 (entspr. US 6,547,549 B2) verwiesen.

Die Arbeitsweise ist wie folgt:

In dem Polymerisationsreaktor 3 wird die Polymerschmelze 2, insbesondere eine Schmelze aus Polystyrol, Polypropylen, Polyethylen, Polylactiden, Celluloseacetaten oder Mischungen dieser Polymere erzeugt. Die Polymerschmelze 2 weist beim Austritt aus dem Reaktorbehälter 4 eine Temperatur von 240°C bis 300°C auf. Die Polymerschmelze 2 wird nach dem Verlassen des Reaktorbehälters 4 mittels der ersten Schmelzepumpe 6 mit einem Druck von 70 bis 300 bar in den ersten statischen Schmelzekühler 9 eingebracht. In dem ersten Schmelzekühler 9 wird die Temperatur der Polymerschmelze 2 verringert, um eine schonende Weiterverarbeitung der Polymerschmelze 2 zu gewährleisten. Nach dem Verlassen des ersten Schmelzekühlers 9 weist die Polymerschmelze 2 eine Temperatur von weniger als 240°C, insbesondere von weniger als 220°C, und insbesondere von weniger als 200°C auf.

Anschließend wird die gekühlte Polymerschmelze 2 über die Schmelze-Zuführöffnung 19 der Schneckenmaschine 13 zugeführt. Mittels der ersten Zuführeinrichtung 27 wird der gekühlten Polymerschmelze 2 mindestens ein Additiv 25 über die Additiv-Zuführöffnung 26 zugegeben. Als Additive 25 werden insbesondere Flammschutzmittel, Zellmodifikatoren, Graphite oder Farbstoffe verwendet. Zusätzlich können über die Additiv-Zuführöffnung 26 weitere Prozesshilfsmittel zugegeben werden.

Die zugegebenen Additive 25 werden in der ersten Mischzone 21 mittels der Misch- und Knetelemente 28 in die gekühlte Polymerschmelze 2 homogen eingemischt. Die additivhaltige Polymerschmelze 2 wird beim Einmischen mittels der ersten Kühleinrichtung 29 gekühlt, so dass die aus dem Eintrag von Scherenergie resultierende Temperaturerhöhung der Polymerschmelze 2 ausgeglichen wird. Durch die Schneckenstege 30 wird die Stauzone 22 erzeugt, in der die Bohrungen 15, 15' vollständig mit Polymerschmelze 2 gefüllt sind. Die Polymerschmelze 2 wirkt in der Stauzone 22 als Dichtung zwischen der ersten Mischzone 21 und der zweiten Mischzone 23.

Mittels der zweiten Zuführeinrichtung 33 wird mindestens ein Treibmittel 31 über die Treibmittel-Zuführöffnung 32 der additivhaltigen Polymerschmelze 2 zugegeben. Als Treibmittel 31 werden insbesondere Kohlenwasserstoffe, wie beispielsweise n-Pentan oder iso-Pentan, Kohlendioxid, Stickstoff oder Mischungen dieser Verbindungen verwendet. Aufgrund der Stauzone 22 findet kein Verlust von Treibmittel 31 in Richtung der ersten Mischzone 21 statt. Das Treibmittel 31 wird in flüssiger oder gasförmiger Form zugegeben und mittels der Misch- und Knetelemente 34 in der zweiten Mischzone 23 in die additivhaltige Polymerschmelze 2 homogen eingemischt. Die additiv- und treibmittelhaltige Polymerschmelze 2 wird in der zweiten Mischzone 23 mittels der zweiten Kühleinrichtung 35 gekühlt, so dass die aus dem Eintrag von Scherenergie resultierende Temperaturerhöhung der Polymerschmelze 2 ausgeglichen wird. Die Temperatur der Polymerschmelze 2 beim Austritt aus der Schneckenmaschine 13 entspricht im Wesentlichen der Temperatur beim Eintritt in die Schneckenmaschine 13. Der Druck der Polymerschmelze 2 bei der Zugabe des Treibmittels 31 wird in der zweiten Mischzone 23 konstant gehalten oder erhöht, um eine Entmischung des Treibmittels 31 aus der Polymerschmelze 2 zu verhindern.

Nach dem Verlassen der Schneckenmaschine 13 wird die Polymerschmelze 2 mittels der zweiten Schmelzepumpe 36 mit einem Druck von 70 bis 300 bar in den zweiten statischen Schmelzekühler 37 eingegeben. Die zweite Schmelzepumpe 36 entlastet die Schneckenmaschine 13 von der Funktion der Druckerhöhung, wodurch eine Temperaturerhöhung der Polymerschmelze 2 vermieden wird. Durch den zweiten Schmelzekühler 36 wird der aus der Zugabe des Treibmittels 31 resultierende Viskositätsabfall der Polymerschmelze 2 ausgeglichen. Weiterhin kann eine Temperaturerhöhung aufgrund des Eintrags von Scherenergie in der Schneckenmaschine 13 in den Fällen abgebaut werden, in denen die Kühleinrichtungen 29, 35 keine ausreichende Kühlung bereitstellen oder überhaupt nicht vorgesehen sind. Beim Verlassen des zweiten Schmelzekühlers 37 weist die Polymerschmelze 2 eine Temperatur von weniger als 220°C, insbesondere von weniger als 200°C, und insbesondere von weniger als 170°C auf.

Nach dem Verlassen des zweiten Schmelzekühlers 37 wird die Polymerschmelze 2 mittels der dritten Schmelzepumpe 38 mit einem Druck von 70 bis 300 bar der Granuliereinrichtung 39 zugeführt und in üblicher Weise granuliert, so dass aus der Polymerschmelze 2 ein Polymergranulat erzeugt wird.

Je nach Wahl der Polymerschmelze 2 und des Treibmittels 31 können in Abhängigkeit des Granulierverfahren sowohl expandierfähige als auch expandierte Polymergranulate hergestellt werden. Zur Herstellung expandierfähiger Polymergranulate kommt bevorzugt eine Unterwassergranulierung zum Einsatz, wohingegen zur Herstellung expandierter Polymergranulate bevorzugt eine Wasserringgranulierung zum Einsatz kommt.

Bei weiteren Ausführungsbeispielen der Erfindung kann die Polymerschmelze durch eine weitere Schneckenmaschine bereitgestellt werden, so dass ein Polymerisationsreaktor und eine Schmelzepumpe zum Bereitstellen der Polymerschmelze nicht erforderlich sind. Weiterhin können die Kühleinrichtungen in den Mischzonen entfallen und eine aus dem Eintrag von Scherenergie resultierende Temperaturerhöhung der Polymerschmelze vollständig in dem zweiten Schmelzekühler ausgeglichen werden.

## Patentansprüche

1. Verfahren zur Herstellung eines Polymergranulats, umfassend die folgenden Schritte:
- Bereitstellen einer Polymerschmelze (2),
- erstes Kühlen der Polymerschmelze (2) mittels eines ersten statischen Schmelzekühlers (9),
- Zugabe mindestens eines Additivs (25) zu der gekühlten Polymerschmelze (2),
- Einmischen des mindestens einen Additivs (25) in die Polymerschmelze (2) mittels einer Schneckenmaschine (13),
- Zugabe mindestens eines Treibmittels (31) in die additivhaltige Polymerschmelze (2),
- Einmischen des mindestens einen Treibmittels (31) in die Polymerschmelze (2) mittels der Schneckenmaschine (13),
- zweites Kühlen der additiv- und treibmittelhaltigen Polymerschmelze (2) mittels eines zweiten statischen Schmelzekühlers (37), und
- Granulieren der gekühlten additiv- und treibmittelhaltigen Polymerschmelze (2).

2. Verfahren nach Anspruch 1, **dadurch gekennzeichnet,**
**dass** die in der Schneckenmaschine (13) befindliche Polymerschmelze (2) gekühlt wird.

3. Verfahren nach Anspruch 1 oder 2, **dadurch gekennzeichnet,**
**dass** nach dem Einmischen des mindestens einen Additivs (25) und vor der Zugabe des mindestens einen Treibmittels (31) mittels der Schneckenmaschine (13) eine Stauzone (22) aus Polymerschmelze (2) erzeugt wird.

4. Verfahren nach einem der Ansprüche 1 bis 3, **dadurch gekennzeichnet,**
**dass** ein Druck der Polymerschmelze (2) bei der Zugabe des mindestens einen Treibmittels (31) während des Einmischens des mindestens einen Treibmittels (31) zumindest konstant gehalten wird.

5. Verfahren nach einem der Ansprüche 1 bis 4, **dadurch gekennzeichnet,**
**dass** ein Druck der Polymerschmelze (2) nach dem Einmischen des mindestens einen Treibmittels (31) mittels einer Schmelzepumpe (36, 38) erhöht wird.

6. Verfahren nach einem der Ansprüche 1 bis 5, **dadurch gekennzeichnet,**
**dass** die Polymerschmelze (2) mittels eines Polymerisationsreaktors (3) bereitgestellt wird.

7. Vorrichtung zur Herstellung eines Polymergranulats, mit
- einem ersten statischen Schmelzekühler (9) zum ersten Kühlen einer Polymerschmelze (2),
- einer dem ersten statischen Schmelzekühler (9) nachgeordneten Schneckenmaschine (13), welche
-- eine erste Mischzone (21) zum Einmischen mindestens eines Additivs (25) aufweist, und
-- eine der ersten Mischzone (21) nachgeordnete zweite Mischzone (23) zum Einmischen mindestens eines Treibmittels (31) aufweist,
- einem der Schneckenmaschine (13) nachgeordneten zweiten statischen Schmelzekühler (37) zum zweiten Kühlen der additiv- und treibmittelhaltigen Polymerschmelze (2), und
- einer Granuliereinrichtung (39) zum Granulieren der gekühlten additiv- und treibmittelhaltigen Polymerschmelze (2).

8. Vorrichtung nach Anspruch 7, **dadurch gekennzeichnet,**
**dass** ein Polymerisationsreaktor (3) zur Bereitstellung der Polymerschmelze (2) vorgesehen ist.

9. Vorrichtung nach Anspruch 7 oder 8, **dadurch gekennzeichnet, dass** die Schneckenmaschine (13) mit mindestens einer Kühleinrichtung (29, 35) versehen ist.

10. Vorrichtung nach einem der Ansprüche 7 bis 9, **dadurch gekennzeichnet,**
**dass** die Schneckenmaschine (13) derart ausgebildet ist, dass eine Stauzone (22) zwischen der ersten und zweiten Mischzone (21, 23) erzeugbar ist.

11. Vorrichtung nach einem der Ansprüche 7 bis 10, **dadurch gekennzeichnet,**
**dass** die Schneckenmaschine (13) als gleichsinnig drehender, dicht kämmender Zwei-Wellen-Schneckenkneter ausgebildet ist.

12. Vorrichtung nach einem der Ansprüche 7 bis 11, **dadurch gekennzeichnet,**
**dass** mindestens eine der Schneckenmaschine (13) nachgeordnete Schmelzepumpe (36, 38) vorgesehen ist.

13. Vorrichtung nach einem der Ansprüche 8 bis 12, **dadurch gekennzeichnet,**
**dass** eine Schmelzepumpe (6) zwischen dem Polymerisationsreaktor (3) und dem ersten statischen Schmelzekühler (9) vorgesehen ist.

## Claims

1. Method for producing a polymer granulate, comprising the following steps:
- providing a polymer melt (2),
- first cooling the polymer melt (2) by means of a first static melt cooler (9),
- adding at least one additive (25) to the cooled polymer melt (2),
- mixing the at least one additive (25) into the polymer melt (2) by means of a screw machine (13),
- adding at least one propellant (31) into the additive-containing polymer melt (2),
- mixing the at least one propellant (31) into the polymer melt (2) by means of the screw machine (13),
- second cooling of the additive and propellant-containing polymer melt (2) by means of a second static melt cooler (37), and
- granulating the cooled additive and propellant-containing polymer melt (2).

2. Method according to claim 1, **characterised in that** the polymer melt (2) located in the screw machine (13) is cooled.

3. Method according to claim 1 or 2, **characterised in that** after mixing in the at least one additive (25) and before adding the at least one propellant (31) by means of the screw machine (13) a buffer zone (22) of polymer melt (2) is formed.

4. Method according to one of claims 1 to 3, **characterised in that** the pressure of the polymer melt (2) on the addition of the at least one propellant (31) is kept at least constant during the mixing in of the at least one propellant (31).

5. Method according to one of claims 1 to 4, **characterised in that** the pressure of the polymer melt (2) is increased after mixing in the at least one propellant (31) by means of a melt pump (36, 38).

6. Method according to one of claims 1 to 5, **characterised in that** the polymer melt (2) is supplied by means of a polymerisation reactor (3).

7. Device for producing a polymer granulate comprising
- a first static melt cooler (9) for the first cooling of a polymer melt (2),
- a screw machine (13) arranged downstream of the first static melt cooler (9) which comprises
-- a first mixing zone (21) for mixing in at least one additive (25) and
-- a second mixing zone (23) arranged downstream of the first mixing zone (21) for mixing in at least one propellant (31),
- a second static melt cooler (37) arranged downstream of the screw machine (13) for the second cooling of the additive and propellant-containing polymer melt (2) and
- a granulating device (39) for granulating the cooled additive and propellant-containing polymer melt (2).

8. Device according to claim 7, **characterised in that** a polymerisation reactor (3) is provided for supplying the polymer melt (2).

9. Device according to claim 7 or 8, **characterised in that** the screw machine (13) is provided with at least one cooling device (29, 35).

10. Device according to one of claims 7 to 9, **characterised in that** the screw machine (13) is designed such that a buffer zone (22) can be formed between the first and second mixing zone (21, 23).

11. Device according to one of claims 7 to 10, **characterised in that** the screw machine (13) is designed as a same-direction rotating, tightly meshing twin-shaft screw compounder.

12. Device according to one of claims 7 to 11, **characterised in that** at least one melt pump (36, 38) arranged downstream of the screw machine (13) is provided.

13. Device according to one of claims 8 to 12, **characterised in that** a melt pump (6) is provided between the polymerisation reactor (3) and the first static melt cooler (9).

## Revendications

1. Procédé pour la fabrication d'un granulé de polymère comprenant les étapes suivantes :
- préparation du polymère en fusion (2),
- premier refroidissement du polymère en fusion (2) au moyen d'un premier refroidisseur statique pour matériaux en fusion (9),
- addition d'au moins un additif (25) au polymère en fusion (2) refroidi,
- incorporation d'au moins un additif (25) au polymère en fusion (2) au moyen d'une machine à vis sans fin (13),
- addition d'au moins un agent d'expansion (31) dans le polymère en fusion (2) comprenant l'additif,
- incorporation d'au moins un agent d'expansion (31) dans le polymère en fusion (2) au moyen d'une machine à vis sans fin (13),
- second refroidissement du polymère en fusion (2) comportant l'additif et l'agent d'expansion au moyen d'un second refroidisseur statique pour matériaux en fusion (37), et
- granulation du polymère en fusion (2) comportant l'additif et l'agent d'expansion refroidi.

2. Procédé selon la revendication 1, **caractérisé en ce**
**que** le polymère en fusion (2) se trouvant dans la machine à vis sans fin est refroidi.

3. Procédé selon les revendications 1 ou 2 **caractérisé en ce**
**qu'**après l'incorporation d'au moins un additif (25), et avant l'addition d'au moins un agent d'expansion (31) au moyen de la machine à vis sans fin (13), une zone de stockage (22) de polymère en fusion (2) soit aménagée.

4. Procédé selon l'une des revendications de 1 à 3 **caractérisé en ce**
**que** la pression du polymère en fusion (2) après l'incorporation d'au moins un agent d'expansion (31) soit maintenue au moins constante pendant l'incorporation d'au moins un agent d'expansion (31).

5. Procédé selon l'une des revendications de 1 à 4 **caractérisé en ce**
**Que** la pression du polymère en fusion (2) soit augmentée après l'incorporation d'au moins un agent d'expansion (31) au moyen d'une pompe pour matériaux en fusion (36, 38).

6. Procédé selon l'une des revendications de 1 à 5 **caractérisé en ce**
**que** le polymère en fusion (2) est préparé au moyen d'un réacteur de polymérisation (3).

7. Dispositif pour la fabrication d'un granulé de polymère comprenant
- un premier refroidisseur statique pour matériaux en fusion (9) pour un premier refroidissement d'un polymère en fusion (2),
- une machine à vis sans fin (13) disposée après le premier refroidisseur statique pour matériaux en fusion (9) qui
-- présente une première zone d'incorporation (21) pour l'incorporation d'au moins un additif (25), et
-- présente une seconde zone d'incorporation (23) disposée après la première zone d'incorporation (21) pour l'incorporation d'au moins un agent d'expansion (31),
- un second refroidisseur statique pour matériaux en fusion (37) disposé après la machine à vis sans fin (13) pour un second refroidissement du polymère en fusion (2) comprenant l'additif et l'agent d'expansion, et
- un dispositif de granulation (39) pour la granulation du polymère en fusion (2) comprenant l'additif et l'agent d'expansion refroidi.

8. Dispositif selon la revendication 7 **caractérisé en ce**
**qu'**un réacteur de polymérisation (3) soit prévu pour la préparation du polymère en fusion (2).

9. Dispositif selon les revendications 7 ou 8 **caractérisé en ce**
**que** la machine à vis sans fin (13) soit munie d'au moins un dispositif de refroidissement (29, 35).

10. Dispositif selon l'une des revendications de 7 à 9 **caractérisé en ce**
**que** la machine à vis sans fin (13) soit conçue de telle manière qu'une zone de stockage (22) puisse être aménagée entre la première zone d'incorporation (21, 23) et la seconde.

11. Dispositif selon l'une des revendications de 7 à 10 **caractérisé en ce**
**que** la machine à vis sans fin (13) soit conçue comme un malaxeur à vis à deux axes proches l'un de l'autre tournant dans le même sens.

12. Dispositif selon l'une des revendications de 7 à 11 **caractérisé en ce**
**qu'**au moins une pompe pour matériaux en fusion (36, 38) disposée après l'une des machines à vis sans fin (13) soit prévue.

13. Dispositif selon l'une des revendications de 8 à 12 **caractérisé en ce**
**qu'**une pompe pour matériaux en fusion (6) soit prévue entre le réacteur de polymérisation (3) et le premier refroidisseur statique pour matériaux en fusion (9).
